# FASCICULE DE BREVET EUROPEEN

(11) **EP 2 204 541 B1**
(45) Date de publication et mention de la délivrance du brevet: **07.03.2012**
(21) Numéro de dépôt: 08172923.8
(22) Date de dépôt: 24.12.2008
(51) Int. Cl.: F01D 5/30, F01D 5/34, F04D 29/32, F04D 29/34, B23K 1/00, B23K 20/00, B23K 5/00, B23K 31/00, B23K 9/00, B23K 11/00, B23K 15/00, B23K 20/12, B23K 26/20, B23K 10/02, B23K 33/00

(54) **Étage rotorique de tambour monobloc aubagé d'un compresseur de turbomachine axiale, et procédé de fabrication associé.**
Rotorstufe einer einteilig beschaufelten Verdichtertrommel einer axialen Strömungsmaschine und entsprechendes Herstellungsverfahren.
Rotor stage of an integral bladed compressor drum of an axial turbomachine and corresponding manufacturing method.

(43) Date de publication de la demande: 07.07.2010
(73) Titulaire: Techspace Aero S.A., 4041 Herstal (BE)
(72) Inventeur: Cortequisse, Jean-François, 3870 Heers (BE); Lhoest, André, 4500 Huy (BE)
(74) Mandataire: Lecomte, Didier

(56) Documents cités:
- EP-A- 0 503 697
- EP-A- 1 176 284
- EP-A- 1 319 842
- EP-A- 1 658 923
- CH-A- 238 024
- DE-C- 752 921
- US-A- 2 944 326
- US-A1- 2006 045 748

## Description

### Domaine technique

L'invention a trait à un tambour de compresseur de turbomachine axiale, plus précisément à un tambour muni de plusieurs rangées d'aubes, chaque rangée formant avec une rangée d'aubes du stator directement en aval de ladite rangée, un étage du compresseur.

### Etat de la technique

Le document de brevet US 2,944,326 a trait à un mode de fixation des aubes à un tambour de compresseur et divulgue les préambules des revendications 1 et 13.

Il est connu, par exemple du brevet GB 776,618, de fixer les aubes d'un compresseur axial à son tambour par assemblage mécanique. Les aubes y comportent, chacune, un pied ayant une forme apte à coopérer en butée avec une rainure prévue sur le tambour. Typiquement, le pied de l'aube présentant deux bords en saillie formant crochet est inséré dans une rainure circulaire du tambour servant de logement aux pieds d'aubes et l'aube est ensuite tournée selon son axe principal de sorte à ce que les deux bords en saillie du pied entre en contact dit positif, c'est-à-dire en butée, avec les deux rebords de la rainure du tambour. Divers moyens de blocage de l'aube dans cette position sont prévus dans ce document, comme des moyens à vis au niveau du pied d'aube, des moyens à vis au niveau du tambour, des moyens à ergot coulissant sur le pied d'aube, soumis à l'effort d'un ressort et apte à coopérer avec des éléments du tambour, ou encore des cales et contre cales coniques entre le pied et les deux bords de la rainure, ces cales et contre cales étant maintenues en place par soudure. Cette technique de fixation des aubes à un tambour de compresseur présentent l'inconvénient de nécessiter une masse de matière importante au niveau du pied d'aube ainsi qu'au niveau de la rainure. En effet, les aubes du rotor d'un compresseur sont soumises, entre autres, à des forces centrifuges considérables. Ces efforts requièrent une fixation résistante des aubes au tambour. A cette fin, les pieds des aubes, en particulier les parties en saillie faisant crochet, sont dimensionnées de façon assez massive et il en va des même des rebords de la rainure circonférentielle du tambour avec lesquels le pied de l'aube coopèrent. Cette masse de matière à la périphérie du tambour induit des efforts centrifuges importants que le tambour doit être à même de reprendre. Ces surplus d'efforts centrifuges à reprendre nécessitent un dimensionnement plus massif du tambour et donc un poids et un coût élevé.

Une construction plus légère d'un tambour de compresseur est connue du brevet RU 2 270 937 C1. Le voile du tambour est construit par un assemblage d'anneaux ou encore entretoises reliées entre elles par des rangées de plateformes d'aubes. Les rangées de plateformes d'aubes forment à proprement parler la prolongation du voile du tambour. Ces plateformes sont soudées entre-elles et avec les sections intermédiaires du voile. Cette construction manque cependant de rigidité en soi et requiert de nombreux renforts depuis le centre du tambour jusqu'à la face interne du voile, soit directement sous les aubes, soit sous les sections intermédiaires du voile. Cette construction s'avère complexe et longue à assembler. Les coûts de production restent ainsi relativement élevés.

La demande de brevet EP 1 319 842 A1 divulgue un tambour en plusieurs parties ou tronçons selon l'axe de rotation et assemblés entre eux par vissage. Les aubes y sont fixées au niveau des jonctions entre les tronçons, soit par verrou, soit directement via les moyens de vissage. En effet, dans le premier cas, les pieds d'aubes ont une forme avec des bords en saillie approximativement selon la direction de l'axe de rotation, ces bords en saillie coopérant avec des rainures correspondantes sur chaque extrémité de tronçon au niveau de leur jonction. Lors de l'assemblage des deux tronçons, les pieds d'aubes, en particulier les bords en saillie, sont emprisonnés dans les rainures opposées des tronçons et mis en pression lors du serrage des moyens de fixation. Dans le second cas, les pieds d'aubes comportent des perçages au travers desquels les moyens de fixation des tronçons sont assemblés. Cette construction du tambour ou rotor en plusieurs tronçons ou couronnes pose des problèmes de précision lors de l'assemblage. De plus, les parties de tronçons coopérant avec les pieds d'aubes et aussi avec les moyens de fixation doivent être dimensionnées de manière assez massive afin de pouvoir reprendre les efforts centrifuges sur les aubes d'une part, et les efforts ponctuels de serrage d'autre part.

### Exposé de l'invention

L'invention a pour objet de proposer une construction de tambour de compresseur palliant au moins partiellement les problèmes sus mentionnés de l'état de l'art.

L'invention consiste en un étage rotorique de tambour de compresseur pour turbomachine axiale, comprenant un corps creux en forme de voile généralement symétrique en révolution par rapport à un axe de rotation correspondant à l'axe de la turbomachine ; une pluralité d'aubes disposées à la périphérie du corps ; où chaque aube de la pluralité d'aubes comporte à son pied une plate forme de fixation logée dans une ouverture correspondante pratiquée dans le voile du corps creux, chaque plateforme étant logée dans une ouverture correspondante de sorte à ce que la surface extérieure de chaque plateforme essentiellement affleure avec la surface extérieure du voile au bord de l'ouverture correspondante ; et chaque plateforme est liée au corps creux par soudure entre le bord extérieur de la plateforme et le bord intérieur de l'ouverture correspondante ; et le corps creux comprend deux flancs, chacun généralement dans un plan perpendiculaire à l'axe, l'un étant en amont et l'autre en aval de la rangée d'ouvertures, les bords extérieurs des flancs étant à proximité des ouvertures de la rangée.

Cette construction de tambour, en particulier d'assemblage des aubes au tambour, permet un gain de matière et donc de masse substantiel au niveau du voile. La matière sinon nécessaire pour réaliser les pieds d'aubes massifs incluant le bulbe de fixation (s'insérant dans les encoches et rainures du tambour) selon l'art antérieur est retirée, permettant une répartition optimisée des épaisseurs et un gain de masse substantiel. De plus, en raison de l'assemblage par soudure, les interfaces entre les aubes et le tambour sont grandement simplifiées et les tolérances sur les pieds d'aubes et sur zones réceptrices du tambour sont moins serrées. Ceci permet une diminution des coûts d'usinage et le nombre de non-conformités.

Cette construction de tambour, en particulier d'assemblage des aubes au tambour, permet également une meilleure maitrise de la position des aubes par rapport au tambour, réduisant fortement, voire annulant, les rotations en fonctionnement des aubes dans le tambour comme cela peut être le cas dans l'art antérieur.

Préférentiellement les ouvertures sont pratiquées dans le corps creux de sorte à former au moins une rangée sur le pourtour du corps creux.

Préférentiellement le corps creux est d'un seul tenant, préférentiellement venu de la même matière.

Préférentiellement les ouvertures sont pratiquées dans le corps creux par usinage.

Préférentiellement les ouvertures et les plateformes correspondantes ont une forme générale de parallélogramme dont les coins sont arrondis.

Les nervures (prolongement des flancs amont et aval vers l'intérieur du corps creux) optimisent le raidissement du tambour et permettent de mieux gérer l'ovalisation du tambour aux conditions de fonctionnement nominales et extrêmes.

Préférentiellement le corps creux comprend deux nervures annulaires intérieures formant chacune un des flancs en amont et en aval de la rangée d'ouvertures.

Préférentiellement le corps creux comporte une partie généralement cylindrique d'un seul tenant, préférentiellement venu de matière avec le flanc aval et comportant au moins une nervure circulaire à son pourtour destinée à coopérer en frottement avec une virole d'un redresseur de stator formant avec la rangée d'aubes de l'étage rotorique un étage de compresseur.

Préférentiellement un élastomère est appliqué sur la face intérieure des plateformes et les faces intérieures des flancs amont et aval afin d'assurer un amortissement des vibrations des aubes et du corps creux.

Préférentiellement au moins deux bords opposés des ouvertures et les bords correspondants des plateformes sont biseautés de sorte à réduire la section de passage des ouvertures vers l'intérieur du corps creux, permettant ainsi une mise en place des aubes dans les ouvertures depuis l'extérieur du corps creux.

Préférentiellement la liaison par soudure entre les plateformes et les ouvertures est réalisée sur la totalité du contour des plateformes.

Préférentiellement la liaison par soudure entre les plateformes et les ouvertures est réalisée à partir de la surface extérieure du corps creux.

Préférentiellement chaque aube de la pluralité d'aubes est d'un seul tenant avec sa plateforme, préférentiellement venu de matière avec sa plateforme.

L'invention concerne également un tambour de compresseur pour turbomachine axiale comprenant au moins un étage rotorique tel que décrit ci-avant.

L'invention concerne également un compresseur de turbomachine axiale comprenant un tambour tel que défini ci-avant.

L'invention concerne également une turbomachine axiale comprenant un compresseur tel que défini ci-avant.

L'invention concerne également un procédé d'obtention d'un étage de tambour de compresseur pour turbomachine axiale, comprenant les étapes suivantes :
- mise à disposition d'un corps creux en forme de voile généralement symétrique en révolution par rapport à un axe de rotation correspondant à l'axe de la turbomachine ;
- mise à disposition d'une pluralité d'aubes avec à leurs pieds une plate forme de fixation ;
- fixation des aubes aux corps creux par leurs plates formes de fixation ;
où des ouvertures correspondant aux plates formes des aubes sont pratiquées dans le voile du corps creux ; et en ce que l'étape de fixation des aubes consiste à insérer la plate forme de chaque aube dans une ouverture correspondante du voile de sorte à ce que la surface extérieure de chaque plateforme essentiellement affleure avec la surface extérieure du corps creux au bord de l'ouverture correspondante ; et à lier chaque plate forme au corps creux par soudure entre le bord extérieur de la plateforme et le bord intérieur de l'ouverture correspondante ; et où le corps creux comprend deux flancs, chacun généralement dans un plan perpendiculaire à l'axe, l'un étant en amont et l'autre en aval de la rangée d'ouvertures, les bords extérieurs des flancs étant à proximité des ouvertures de la rangée.

De manière avantageuse, un cylindre est inséré dans le corps creux lors de l'opération de soudure afin de protéger les autres parties du tambour.

Egalement de manière avantageuse, la liaison par soudure entre les plateformes et les ouvertures est réalisée à partir de la surface extérieure du corps creux.

### Description sommaire des figures

La figure 1 est une vue en coupe d'un tambour et du stator d'un compresseur, en accord avec l'invention.
La figure 2 est une vue partielle de l'extérieur du tambour selon l'invention.
La figure 3 est une vue en élévation d'une rangée d'aubes du tambour, cette vue étant rabattue dans un plan.
La figure 4 est une vue en coupe d'une partie du tambour selon l'invention, où de l'élastomère est appliqué sous les aubes et contre les flancs du tambour.
La figure 5 est une coupe de la plateforme d'une aube logée dans l'ouverture correspondante pratiquée dans le voile du tambour et illustrant le procédé de soudure liant la plateforme et le tambour.

### Meilleure manière de réaliser l'invention

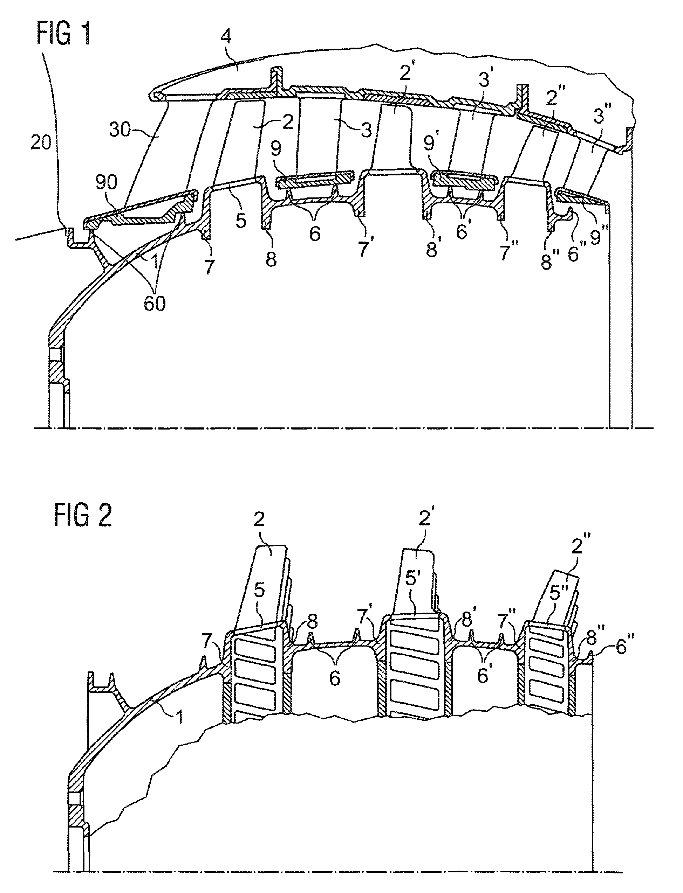

Un compresseur comprenant un tambour selon l'invention est illustré à la figure 1. Il s'agit d'une vue en coupe du rotor et du stator. Le rotor est constitué d'un corps creux 1 de forme généralement cylindrique en forme de voile. Ce voile est généralement symétrique en révolution par rapport à son axe de rotation. Pour des raisons de simplicité de l'illustration, la figure 1 ne montre que la moitié supérieure de l'ensemble rotor et stator, sachant que l'autre moitié inférieure est symétrique à la moitié supérieure par rapport à l'axe de rotation. Il en va de même pour le stator 4. Le stator 4 et le rotor 1 définissent un passage annulaire pour une veine fluide d'air à déplacer et comprimer de la gauche vers la droite selon la représentation à la figure 1. A cet effet, le rotor comprend une soufflante 20 (partiellement représentée à l'extrême gauche de la figure) et trois rangées parallèles d'aubes 2, 2' et 2". Ces aubes sont rigidement fixées au voile et donc tournent avec le rotor. Des rangées d'aubes redresseurs 30, 3, 3', 3" sont disposées entre les rangées d'aubes du stator. Ces aubes redresseurs sont rigidement fixées à leurs extrémités supérieures au stator 4. Chaque rangée d'aubes fixes constitue une grille redresseur ayant pour fonction de redresser l'écoulement fluide provenant de la rangée d'aubes du rotor directement en amont. Une rangée d'aubes du rotor combinée à une rangée d'aubes du stator directement en aval constitue un étage du compresseur. Dans le cas de la figure 1 par exemple, le compresseur comporte quatre étages, le premier constitué des rangées d'aubes rotoriques 20 et statoriques 30, le deuxième constitué des rangées d'aubes rotoriques 2 et statoriques 3, le troisième constitué des rangées d'aubes rotoriques 2' et statoriques 3' et le quatrième constitué des rangées d'aubes rotoriques 2" et statoriques 3". Une rangée d'aubes statoriques 30 est présente entre la soufflante 20 et la première rangée d'aubes rotoriques 2. Cette rangée d'aubes redresse l'écoulement fluide généré par la soufflante 20.

Comme on peut le voir à la figure 1, les aubes 30, 3, 3' et 3" des redresseurs sont fixées aux viroles extérieures du stator 4. Les extrémités inférieures des aubes de chaque rangée du stator sont encastrées dans une virole intérieure 90, 9, 9', 9". Chaque virole est dimensionnée de sorte à lier les aubes du stator entre elles et à coopérer de manière étanche avec le rotor 1. En effet, chaque virole comporte sur sa face interne un matériau friable plus couramment désigné par le terme anglais « abradable » qui a, comme son nom l'indique, la capacité à se désagréger en fines poussières lors de friction avec les léchettes 60, 6, 6', 6" du rotor. Ces léchettes sont des nervures circulaires prévues sur la surface extérieure du rotor en regard des viroles intérieures 90, 9, 9' et 9", respectivement. Ces nervures s'étendent dans un plan généralement perpendiculaire à l'axe de rotation du rotor et présentent un bord extérieur en forme de pointe en vue de pouvoir entrer en contact avec le matériau abradable pour assurer une certaine étanchéité tout en minimisant la surface de contact et donc les forces de frottement.

Le tambour du compresseur de la figure 1 est illustré à la figure 2. Le tambour ou rotor est constitué d'un voile 1 monobloc, c'est-à-dire d'un seul tenant. Le tambour a une forme générale de symétrie de révolution axiale dont la paroi est formée par le voile 1. Le tambour est typiquement obtenu par usinage d'un brut de forge mais d'autres procédés de mise à forme bien connus dans le métier peuvent être envisagés. Comme on peut le voir sur la figure 2, le voile 1 est prolongé au niveau des rangées d'aubes rotoriques par des flancs de part et d'autre de chaque rangée. En effet, la première rangée d'aubes 2 est supportée par les flancs 7 et 8. Ces flancs sont généralement annulaires dans un plan généralement perpendiculaire à l'axe du tambour. Les parties intérieures des flancs 7 et 8 débouchent dans le volume intérieur du tambour pour former des nervures renforçant le tambour, et les parties extérieures forment une surface extérieure du tambour qui forme la veine aérodynamique dans le prolongement des viroles intérieures des étages redresseurs amont et aval. Le voile 1 est connecté à une partie intermédiaire des flancs. Il en va de même pour les étages suivants, à savoir que le tambour est prolongé similairement de part et d'autre des rangées d'aubes 2' et 2" par les flancs 7', 8', 7" et 8", respectivement.

La surface extérieure du tambour entre deux flancs voisins 7 et 8, 7' et 8' ou 7" et 8" est généralement cylindrique. Une série d'ouvertures sont pratiquées dans cette surface en vue de recevoir, chacune, la plateforme 5 d'une aube 2. Ces ouvertures ont une forme constante de parallélogramme dont les coins sont arrondis. Les plateformes 5, 5', 5" des aubes ont une forme correspondante à celle des ouvertures. Chaque plateforme est insérée dans une ouverture correspondante et y est ensuite fixée par soudage sur tout le pourtour de la plateforme. Les plateformes bien que généralement planes peuvent être légèrement courbées dans une direction de sorte à mieux épouser la forme cylindrique de la surface extérieure du tambour entre deux flancs. Chaque plateforme est insérée dans son ouverture respective de sorte à ce que sa surface extérieure affleure avec la surface extérieure de l'ouverture directement à son bord.

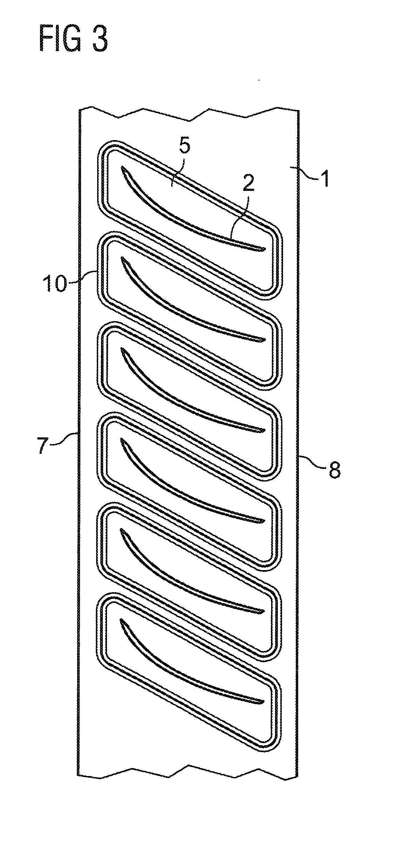

La figure 3 est une vue en élévation d'une rangée d'aubes du tambour, cette vue étant rabattue dans un plan correspondant au plan de la feuille. Cette figure montre bien la forme en parallélogramme des ouvertures 10 et des plateformes 5. Le profil 2 des aubes au niveau de la plateforme y est bien représenté. La forme en parallélogramme des ouvertures et des plateformes est choisie de telle sorte à ce que le profil de l'aube soit plus ou moins centré sur la surface définie par la plateforme. Les quatre bords de la plateforme sont ainsi à distance du pied de l'aube. Cet agencement présente l'avantage que les contraintes thermiques occasionnées par l'opération de soudage de la plateforme au tambour ne sont pas transmises directement au pied de l'aube. De plus, la présence de matière entre les ouvertures est garante du maintien de la forme et des dimensions du tambour dans des tolérances assez serrées avant et après la mise en place des aubes, et ce malgré l'opération de soudure. Les ouvertures 10 sont typiquement pratiquées par usinage. D'autres procédés connus de l'homme de l'art peuvent également être envisagés.

Les aubes rotoriques sont obtenues à partir de brut de forge, de fonderie ou autre et ensuite usinées afin de mettre leur tête et leur plateforme à forme et dimension finale. Un jeu de montage est prévu entre les bords extérieurs de la plateforme 5 et les bords intérieurs de l'ouverture 10, typiquement de l'ordre de quelques dixièmes de millimètre ou encore de l'ordre du millimètre.

Les flancs 7 et 8 de part de d'autre de la rangée d'ouvertures sont à proximité des bords amont et aval des ouvertures. Cette proximité est mieux illustrée à la figure 2 qui montre que ces flancs forment un prolongement annulaire vers l'extérieur ayant approximativement la largeur des plateformes selon une direction parallèle à l'axe du tambour. Cette proximité permet de bien reprendre les efforts centrifuges auxquels les aubes sont soumises. La distance entre les faces intérieures de deux flancs de part et d'autre d'une rangée d'aubes est égale ou légèrement supérieure à la largeur des aubes mesurées au niveau de la plateforme selon une direction parallèle à l'axe du tambour, typiquement jusqu'à 110 % de cette largeur.

Comme on le voit sur la figure 1, les flancs 7 et 8 forment également un prolongement annulaire vers l'intérieur du voile du tambour ayant approximativement la largeur des plateformes selon une direction parallèle à l'axe du tambour. Ces nervures permettent de renforcer le raidissement du tambour et de réduire l'ovalisation de celui-ci en cas de déséquilibre de la masse en rotation par exemple lors d'une perte d'aube de soufflante.

Le concept de fixation des aubes et du raidissement du tambour via les nervures tel que décrit permet un gain de matière au niveau du voile et par là permet un rapprochement du voile sous les viroles des aubes statoriques et donc un raccourcissement des léchettes.

La figure 3 montre que les plateformes et les ouvertures ont une forme constante. On pourrait cependant envisager des plateformes de dimensions et/ou formes différentes le long d'une rangée. Par exemple, une plateforme pourrait comporter deux, trois ou plus d'aubes et avoir donc des dimensions en conséquence. La figure 3 illustre un pas constant entre les aubes d'une rangée. On pourrait imaginer de faire varier le pas tout en conservant le principe de l'invention.

Le tambour tel qu'illustré aux figures 1 et 2 est d'un seul tenant, c'est-à-dire qu'il est par exemple usiné à partir d'un brut de forge. On pourrait cependant envisager un tambour mixte dont une partie seulement serait faite d'un seul tenant, précisément la partie comportant une ou des rangées d'aubes positionnées avec leurs plateformes dans des ouvertures correspondantes et soudées à la jonction plateforme/ouverture. Une telle partie de tambour pourrait ensuite être fixée à une autre partie du type disque aubagé monobloc par exemple.

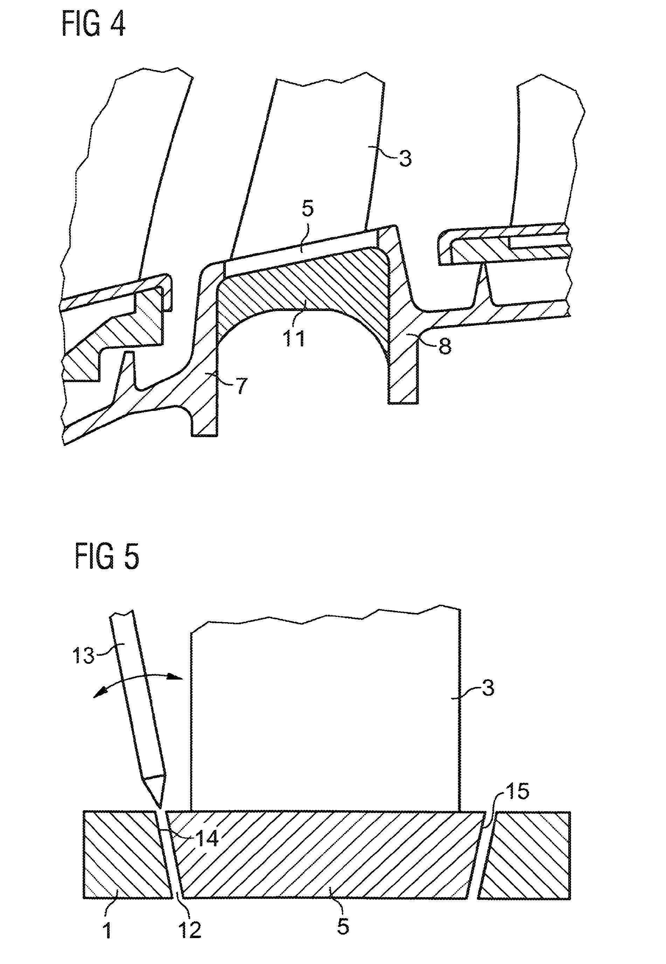

Le procédé de soudage des plateformes au tambour est illustré à la figure 5 qui est une coupe de la plateforme d'une aube positionnée dans une ouverture du tambour prête à être soudée. Les bords de la plateforme ainsi que les bords correspondants de l'ouverture sont biseautés. Le biseau est tel que la plateforme est mise en place dans l'ouverture à partir de l'extérieur du tambour et la plateforme est empêchée de passer outre l'ouverture. Le biseau est formé par une surface plane de chaque bord 14 de l'ouverture et chaque bord 15 de la plateforme inclinés d'un angle de quelques degrés, typiquement entre 5 et 20°. Il est à noter qu'il est suffisant que les faces de deux bords opposés soient biseautés afin d'atteindre les avantages de positionnement indiqués ci-avant. La soudure appliquée par l'électrode 13 se fait à partir de l'extérieur du tambour et joint les bords de la plateforme et de l'ouverture sur toute la périphérie. Différents procédés de soudure, comme par exemple la soudure par faisceau d'électrons, la soudure laser, TIG (tungstène sous gaz inerte), brasage, sont applicables en fonction de différents paramètres tels que, par exemple, les matériaux à souder, la géométrie et la direction des cordons de soudure. Une soudure conique est décrite ici, mais on peut également imaginer une soudure cylindrique, sans biseau des ouvertures du tambour et des plateformes des aubes.

La figure 4 est une vue agrandie en coupe d'une aube et de la partie de tambour de part et d'autre de l'aube. Un élastomère 11 y est appliqué sous la plateforme 5 de l'aube 3 et sur les faces internes adjacentes des flancs 7 et 8. Cet élastomère joue un rôle d'amortissement des vibrations des aubes et du tambour. La présence d'une cavité formée par les flancs et la plateforme des aubes est particulièrement intéressante pour l'application d'un tel élastomère.

## Revendications

1. Etage rotorique de tambour de compresseur pour turbomachine axiale, comprenant
un corps creux (1) en forme de voile généralement symétrique en révolution par rapport à un axe de rotation correspondant à l'axe de la turbomachine ; une pluralité d'aubes (2) disposées à la périphérie du corps ;
et où chaque aube de la pluralité d'aubes (2) comporte à son pied une plate forme de fixation (5) logée dans une ouverture correspondante (10) pratiquée dans le voile du corps creux, chaque plateforme (5) étant logée dans une ouverture correspondante (10) de sorte à ce que la surface extérieure de chaque plateforme essentiellement affleure avec la surface extérieure du voile au bord de l'ouverture correspondante ; et
chaque plateforme est liée au corps creux par soudure entre le bord extérieur de la plateforme et le bord intérieur de l'ouverture correspondante **caractérisé en ce que**
le voile (1) comprend deux flancs (7, 8), chacun généralement dans un plan perpendiculaire à l'axe, l'un étant en amont et l'autre en aval de la rangée d'ouvertures, les bords extérieurs des flancs étant à proximité des ouvertures de la rangée.

2. Etage rotorique de tambour de compresseur selon la revendication 1 **caractérisé en ce que** les ouvertures (10) sont pratiquées dans le corps creux (1) de sorte à former au moins une rangée sur le pourtour du corps creux.

3. Etage rotorique de tambour de compresseur selon la revendication 2 **caractérisé en ce que** le corps creux (1) est d'un seul tenant, préférentiellement venu de la même matière.

4. Etage rotorique de tambour de compresseur selon la revendication 3 **caractérisé en ce que** les ouvertures (10) sont pratiquées dans le corps creux par usinage.

5. Etage rotorique de tambour de compresseur selon la revendication 4 **caractérisé en ce que** les ouvertures (10) et les plateformes (5) correspondantes ont une forme générale de parallélogramme, dont les coins sont arrondis.

6. Etage rotorique de tambour de compresseur selon la revendication 5, **caractérisé en ce que** le corps creux comprend deux nervures annulaires intérieures formant chacune un prolongement d'un des flancs en amont et en aval de la rangée d'ouvertures.

7. Etage rotorique de tambour de compresseur selon la revendication 6, **caractérisé en ce que** le corps creux (1) comporte une partie généralement cylindrique d'un seul tenant, préférentiellement venu de matière, avec le flanc aval et comportant au moins une nervure circulaire (6) à son pourtour destinée à coopérer en frottement avec une virole d'un redresseur de stator formant avec la rangée d'aubes de l'étage rotorique un étage du compresseur.

8. Etage rotorique de tambour de compresseur selon la revendication 7 **caractérisé en ce qu'**un élastomère est appliqué sur la face intérieure des plateformes (5) et les faces intérieures des flancs amont et aval (7, 8) afin d'assurer un amortissement des vibrations entre les aubes (5) et le corps creux (1).

9. Etage rotorique de tambour de compresseur selon la revendication 8, **caractérisé en ce que** au moins deux bords opposés des ouvertures et les bords correspondants des plateformes (5) sont biseautés de sorte à réduire la section de passage des ouvertures (10) vers l'intérieur du corps creux, permettant ainsi une mise en place des aubes dans les ouvertures depuis l'extérieur du corps creux.

10. Etage rotorique de tambour de compresseur selon la revendication 9 **caractérisé en ce que** la liaison par soudure entre les plateformes et les ouvertures est réalisée sur la totalité du contour des plateformes (5).

11. Etage rotorique de tambour de compresseur selon la revendication 10, **caractérisé en ce que** chaque aube de la pluralité d'aubes (5) est d'un seul tenant avec sa plateforme, préférentiellement venu de matière avec sa plateforme.

12. Tambour de compresseur pour turbomachine axiale comprenant au moins un étage rotorique selon l'une des revendications précédentes.

13. Procédé d'obtention d'un étage de tambour de compresseur pour turbomachine axiale, comprenant les étapes suivantes :
- mise à disposition d'un corps creux (1) en forme de voile généralement symétrique en révolution par rapport à un axe de rotation correspondant à l'axe de la turbomachine ;
- mise à disposition d'une pluralité d'aubes (2) avec au pied de chaque aube une plate forme de fixation (5) ;
- fixation des aubes (2) aux corps creux (1) par leurs plates formes de fixation (5) ;
et où des ouvertures (10) correspondant aux plates formes (5) des aubes (2) sont pratiquées dans le voile du corps creux (1) ; l'étape de fixation des aubes (2) consiste à insérer la plate forme (5) de chaque aube dans une ouverture correspondante (10) du corps creux (1) de sorte à ce que la surface extérieure de chaque plateforme essentiellement affleure avec la surface extérieure du voile au bord de l'ouverture correspondante ; et à lier chaque plate forme au corps creux par soudure entre le bord extérieur de la plateforme et le bord intérieur de l'ouverture correspondante **caractérisé en ce que**
le voile (1) comprend deux flancs (7, 8), chacun généralement dans un plan perpendiculaire à l'axe, l'un étant en amont et l'autre en aval de la rangée d'ouvertures, les bords extérieurs des flancs étant à proximité des ouvertures de la rangée.

14. Procédé d'obtention d'un étage de tambour de compresseur selon la revendication 13, **caractérisé en ce que** la liaison par soudure entre les plateformes et les ouvertures est réalisée à partir de la surface extérieure du corps creux.

## Claims

1. A compressor drum rotor stage for an axial turbomachine, comprising:
a hollow shell body (1) generally rotationally symmetrical about an axis of rotation corresponding to the axis of the turbomachine;
a plurality of blades (2) arranged at the periphery of the body;
wherein each blade in the plurality of blades (2) comprises at its root an attachment platform (5) housed in a corresponding opening (10) made in the hollow shell body, each platform (5) being housed in a corresponding opening (10) such that the outer surface of each platform is essentially flush with the outer surface of the hollow shell body at the edge of the corresponding opening; and
each platform is attached to the hollow body by welding between the outer edge of the platform and the inner edge of the corresponding opening wherein the hollow shell body (1) has two sidewalls (7, 8) each generally in a plane perpendicular to the axis, one being upstream and the other downstream from the row of openings, the outer edges of the sidewalls being near the row openings.

2. Rotor stage of a compressor drum as in claim 1 in which the openings (10) are formed in the hollow body (1) so as to form at least one row around the circumference of the hollow body.

3. Rotor stage of a compressor drum as in claim 2 wherein the hollow body (1) is preferably made of a single piece of the same material.

4. Rotor stage of a compressor drum as in claim 3 wherein the openings (10) in the hollow body are formed by machining.

5. Rotor stage of a compressor drum as in claim 4 wherein the openings (10) and platforms (5) are generally in the shape of parallelograms with rounded corners.

6. Rotor stage of a compressor drum as in claim 5 wherein the hollow body is made of two annular interior ribs, each one being an extension of the upstream and downstream sidewalls of the row of openings.

7. Rotor stage of a compressor drum as in claim 6 wherein the hollow body (1) consisting of a generally single cylindrical portion, is preferably made as part of the downstream sidewall and has at least one circular rib (6) at its circumference designed to engage frictionally with a ferrule on a set of fixed guide vanes forming, together with the row of blades on the rotating part, a compressor stage.

8. Rotor stage of a compressor drum as in claim 7 wherein an elastomer is applied to the inner face of the platforms (5) and the inner faces of the upstream and downstream sidewalls (7, 8) to provide vibration damping between the blades (5) and the hollow body (1).

9. Rotor stage of a compressor drum as in claim 8 wherein at least two opposite edges of the openings and the corresponding edges of the platforms (5) are bevelled so as to reduce the cross sectional area of the openings (10) on the inner side of the hollow body, as well and thus allowing the blades to be inserted into the openings from outside the hollow body.

10. Rotor stage of a compressor drum as in claim 9 wherein the welded join between an attachment platform and its corresponding opening is made along the entire periphery of the platform (5) for all the platforms (5).

11. Rotor stage of a compressor drum as in claim 10, wherein each blade of the plurality of blades (5) is of a piece formed as an integral part of the platform.

12. Compressor drum for an axial turbomachine consisting of at least one rotor stage in accordance with one of the preceding claims.

13. Method for obtaining a rotor stage of a compressor drum for an axial turbomachine, comprising the following steps:
- providing a hollow shell body (1) generally rotationally symmetrical about an axis of rotation corresponding to the axis of the turbomachine;
- providing a plurality of blades (2) with an attachment platform at the root of each blade;
- with the blades (2) fixed to the hollow body (1) by their platforms (5);
and where the openings (10) corresponding to the blade (2) platforms (5) are formed in the hollow shell body (1); the blades (2) are fitted by inserting the platform (5) of each blade into the corresponding opening (10) in the hollow shell body (1) so that the outer surface of each platform is essentially flush with the outer surface of the hollow body at the edge of the corresponding opening; and each platform is joined to the hollow body by welding the outer edge of the platform to the inner edge of the corresponding opening where the hollow shell body (1) includes two sidewalls (7, 8), each usually in a plane perpendicular to the axis, the one being upstream and the other downstream of the row of openings, the outer edges of the sidewalls being near the row openings.

14. Method for obtaining a rotor stage of a compressor drum according to claim 13, wherein the welded connections between the platforms and the openings are made from the outer surface of the hollow body.

## Patentansprüche

1. Rotorstufe einer Verdichtertrommel für eine axiale Strömungsmaschine, umfassend:
einen Hohlkörper (1) in Form eines Abdeckteils, das bezogen auf eine Drehachse, die der Achse der Strömungsmaschine entspricht, im Allgemeinen rotationssymmetrisch ist;
eine Vielzahl von Schaufeln (2), die auf dem Umfang des Körpers angeordnet sind;
wobei jede Schaufel der Vielzahl von Schaufeln (2) an ihrem Fuß eine Befestigungsplattform (5) umfasst, die in einer entsprechenden Öffnung (10) aufgenommen ist, die in das Abdeckteil des Hohlkörpers gefertigt ist, wobei jede Plattform (5) so in einer entsprechenden Öffnung (10) aufgenommen ist, dass jede Plattform am Rand der entsprechenden Öffnung mit der Außenfläche des Abdeckteils im Wesentlichen auf gleicher Höhe liegt; und
jede Plattform mit dem Hohlkörper durch Schweißen zwischen der Außenkante der Plattform und der Innenkante der entsprechenden Öffnung verbunden ist, **dadurch gekennzeichnet, dass**
das Abdeckteil (1) zwei Flanken (7, 8) umfasst, jede im Allgemeinen in einer zur Achse senkrechten Ebene, wobei in Strömungsrichtung die eine vor und die andere hinter der Reihe von Öffnungen liegt und sich die Außenkanten der Flanken in der Nähe der Öffnungen der Reihe befinden.

2. Rotorstufe einer Verdichtertrommel nach Anspruch 1, **dadurch gekennzeichnet, dass** die Öffnungen (10) in den Hohlkörper so gefertigt sind, dass sie mindestens eine Reihe auf dem Umfang des Hohlkörpers bilden.

3. Rotorstufe einer Verdichtertrommel nach Anspruch 2, **dadurch gekennzeichnet, dass** der Hohlkörper (1) einstückig ausgebildet ist und bevorzugt aus dem gleichen Material besteht.

4. Rotorstufe einer Verdichtertrommel nach Anspruch 3, **dadurch gekennzeichnet, dass** die Öffnungen (10) durch spanende Formgebung in den Hohlkörper gefertigt sind.

5. Rotorstufe einer Verdichtertrommel nach Anspruch 4, **dadurch gekennzeichnet, dass** die Öffnungen (10) und die entsprechenden Plattformen (5) eine allgemeine Parallelogrammform, deren Ecken abgerundet sind, aufweisen.

6. Rotorstufe einer Verdichtertrommel nach Anspruch 5, **dadurch gekennzeichnet, dass** der Hohlkörper zwei ringförmige Innenrippen umfasst, die jede eine Verlängerung einer der, in Strömungsrichtung vor und hinter der Reihe von Öffnungen liegenden Flanken bilden.

7. Rotorstufe einer Verdichtertrommel nach Anspruch 6, **dadurch gekennzeichnet, dass** der Hohlkörper (1) einen im Allgemeinen zylindrischen, einstückig ausgebildeten Teil, bevorzugt materialeinheitlich, mit der stromabwärts gelegenen Flanke umfasst, und er mindestens eine kreisförmige Rippe (6) auf seinem Umfang umfasst, die zum reibschlüssigen Zusammenwirken mit einem Ring eines Statorleitapparates dient, die mit der Schaufelreihe der Rotorstufe eine Verdichterstufe bildet.

8. Rotorstufe einer Verdichtertrommel nach Anspruch 7, **dadurch gekennzeichnet, dass** ein Elastomer auf der Innenseite der Plattformen (5) und den Innenseiten der stromaufwärts und stromabwärts gelegenen Flanken (7, 8) aufgebracht wird, um eine Schwingungsdämpfung zwischen den Schaufeln (5) und dem Hohlkörper (1) zu gewährleisten.

9. Rotorstufe einer Verdichtertrommel nach Anspruch 8, **dadurch gekennzeichnet, dass** mindestens zwei gegenüberliegende Kanten der Öffnungen und die entsprechenden Kanten der Plattformen (5) abgeschrägt sind, um den Durchgangsquerschnitt der Öffnungen (10) zum Innenbereich des Hohlkörpers zu verringern, wodurch ein Einbau der Schaufeln in die Öffnungen vom Außenbereich des Hohlkörpers aus ermöglicht wird.

10. Rotorstufe einer Verdichtertrommel nach Anspruch 9, **dadurch gekennzeichnet, dass** die Schweißverbindung zwischen den Plattformen und den Öffnungen auf der gesamten Kontur der Plattformen (5) ausgeführt wird.

11. Rotorstufe einer Verdichtertrommel nach Anspruch 10, **dadurch gekennzeichnet, dass** jede Schaufel der Vielzahl von Schaufeln (5) mit ihrer Plattform einstückig, bevorzugt materialeinheitlich mit ihrer Plattform, ausgebildet ist.

12. Verdichtertrommel für eine axiale Strömungsmaschine, die mindestens eine Rotorstufe nach einem der vorangehenden Ansprüche umfasst.

13. Verfahren zur Herstellung einer Verdichtertrommelstufe für eine axiale Strömungsmaschine, das die folgenden Schritte umfasst:
- Bereitstellen eines Hohlkörpers (1) in Form eines Abdeckteils, das bezogen auf eine Drehachse, die der Achse der Strömungsmaschine entspricht, im Allgemeinen rotationssymmetrisch ist;
- Bereitstellen einer Vielzahl von Schaufeln (2) mit einer Befestigungsplattform (5) am Fuß jeder Schaufel;
- Befestigen der Schaufeln (2) an den Hohlkörpern (1) mittels ihrer Befestigungsplattformen (5);
wobei Öffnungen (10), die den Plattformen (5) der Schaufeln (2) entsprechen, in das Abdeckteil des Hohlkörpers (1) gefertigt sind; der Schritt zum Befestigen der Schaufeln (2) darin besteht, die Plattform (5) jeder Schaufel so in die entsprechende Öffnung (10) des Hohlkörpers (1) einzusetzen, dass die Außenfläche jeder Plattform am Rand der entsprechenden Öffnung im Wesentlichen mit der Außenfläche des Abdeckteils auf gleicher Höhe liegt; und darin, jede Plattform mit dem Hohlkörper durch Schweißen zwischen der Außenkante der Plattform und der Innenkante der entsprechenden Öffnung zu verbinden, **dadurch gekennzeichnet, dass**
das Abdeckteil (1) zwei Flanken (7, 8) umfasst, jede im Allgemeinen in einer zur Achse senkrechten Ebene, wobei in Strömungsrichtung die eine vor und die andere hinter der Reihe von Öffnungen liegt und sich die Außenkanten der Flanken in der Nähe der Öffnungen der Reihe befinden.

14. Verfahren zur Herstellung einer Verdichtertrommelstufe nach Anspruch 13, **dadurch gekennzeichnet, dass** die Schweißverbindung zwischen den Plattformen und den Öffnungen von der Außenfläche des Hohlkörpers aus realisiert wird.
